# EUROPEAN PATENT SPECIFICATION

(11) **EP 1 595 787 B1**
(45) Date of publication and mention of the grant of the patent: **06.12.2017**
(21) Application number: 04252760.6
(22) Date of filing: 12.05.2004
(51) Int. Cl.: B64C 9/02, B64C 3/24, B64F 5/00, B29C 70/44, B64C 9/00, B29C 70/86

(54) **Method for fabricating a composite material control surface for an aircraft.**
Verfahren zur Herstellung einer Steuerfläche aus Verbundwerkstoff für ein Flugzeug
Procédé de fabrication d'une gouverne à matériau composite pour un aéronef

(43) Date of publication of application: 16.11.2005
(73) Proprietor: Subaru Corporation, Tokyo 150-8554 (JP)
(72) Inventor: Tanaka, Shigeki, c/o Fuji Jukogyo K.K., Tokyo 160-8316 (JP)
(74) Representative: Manley, Nicholas Michael

(56) References cited:
- US-A- 3 775 238
- US-A- 4 304 376
- US-A- 4 657 615
- US-B1- 6 319 346

## Description

### BACKGROUND OF THE INVENTION

### Field of the Invention

The present invention relates to a method for fabricating a composite control surface having a predetermined hinge member at a leading edge portion thereof.

### Description of the Related Art

A main wing and a tail unit of an aircraft generally have an aileron, an elevator or a rudder, each having a predetermined hinge fitting (hereinafter, referred to as "hinge-attached control surface"), which can be reciprocally rotated, at the leading edge portion. Such hinge-attached control surface is fabricated through a plurality of processes using metal and/or fiber reinforced composite material.

US 6 319 346 B1 discloses a method for fabricating a composite control surface of prepreg layers, using a bladder forming the front portion. Hinge members are provided on the outer surface of the leading edge and are molded together with the remainder of the control surface.

US 3 775 238 A discloses a composite control surface made of two horizontally-split halves, each laid up in a cavity mold. A hinge member can be attached to the front spar.

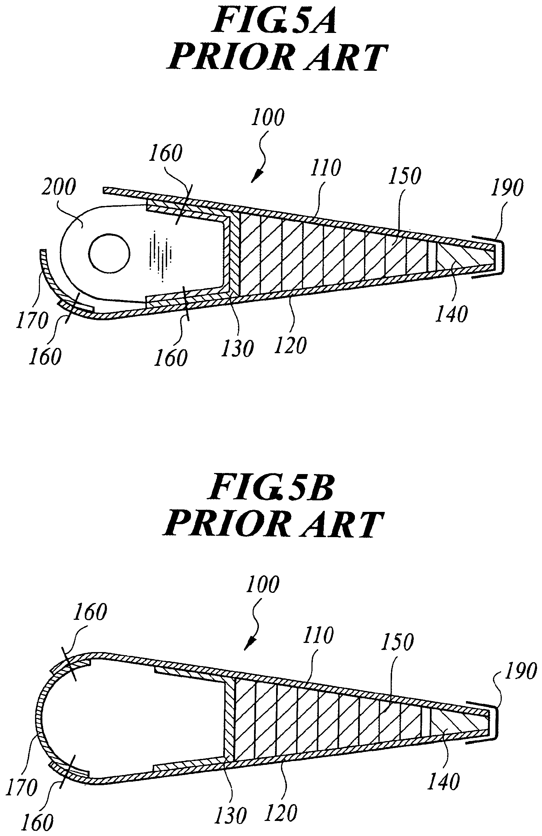

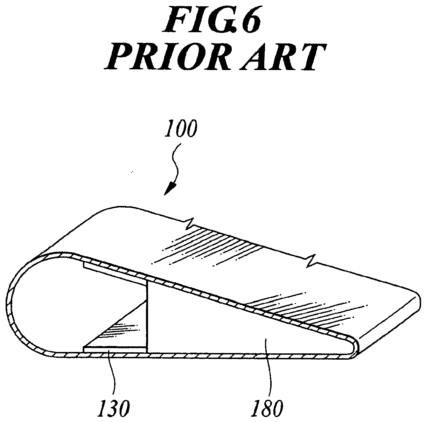

US 4 304 376 A and US 4 657 615 A disclose other composite control surfaces, the former with hinge members on the outer surface of the leading edge. A conventional fabricating method for the hinge-attached control surface made of metal will be explained referring to FIGS. 5A, 5B and 6. FIGS. 5A and 5B show a conventional metal-made hinge-attached control surface 100, wherein FIG. 5A is a cross-sectional view showing a mounting portion of a metal hinge 200 and FIG. 5B is a cross-sectional view showing the portion without the metal hinge 200 therein. FIG. 6 is a perspective view showing the vicinity of a wing tip of the control surface 100 shown in FIGS. 5A and 5B.

The hinge-attached control surface 100 is fabricated by means of processes explained as follows. Initially, as shown in FIGS. 5A and 5B, a control surface assembly is fabricated by bonding an upper skin 110, a lower skin 120, a spar 130 and a honeycomb core 150, with an adhesive. Previously, the upper and lower skins 110 and 120 made of aluminum are fabricated by machining and bending, the spar 130 made of aluminum is fabricated by machining, and the aluminum honeycomb core 150 is strengthened with reinforcement 140 filled, if necessary, after machining. Next, the control surface assembly is connected with the aluminum metal hinge 200 at the front side of a spar with the aid of mechanical members 160, such as bolts, nuts, pins or rivets, and also connected with an aluminum leading edge 170 at its leading edge portion by the mechanical member 160. Thereafter, as shown in FIG. 6, the control surface assembly is bonded with a plastic closure rib 180 at its wing tip portion by an adhesive, and affixed with a glass prepreg 190 at the trailing edge of the assembly so that the adhesion surfaces can be prevented from peeling and are protected. The aluminum parts except the honeycomb core 150 are painted for preventing corrosion and the like.

On the other hand, a conventional control surface made of composite material is fabricated by means of processes as explained in the following. Initially, a control surface assembly is fabricated with an adhesive by secondary adhesion of an upper skin, a lower skin, a spar and a honeycomb core. The upper skin, the lower skin and the spar, which are made of composite material, are prepared by laminating and setting prepreg and being trimmed thereafter. The aluminum honeycomb core is strengthened with reinforcement filled, if necessary, after machining. Next, the control surface assembly is connected with the aluminum metal hinge at the front side of the spar by a mechanical member, such as a bolt, nut, pin or rivet. The assembly is also bonded with a plastic closure rib at its wing tip portion by an adhesive or the like, and affixed with prepreg at the leading and trailing edges so that the adhesion surfaces can be prevented from peeling and are protected. The aluminum parts except the honeycomb core are painted for preventing corrosion. At the area where an aluminum part is in contact with a composite material part composed of carbon fiber, a glass fiber layer is to be formed at the most external layer of the composite material part for preventing electrolytic corrosion.

However, when the above described conventional method is employed for fabricating the hinge-attached control surface, various parts, such as the upper skin, the lower skin, the spar and the like, have to be fabricated by machining and/or laminating/setting of prepreg, which results in very high part-fabrication cost. Also, it is necessary to join these various parts by mechanical members and/or adhesive, which leads to a problem of requiring a lot of labor due to many fabricating processes.

Furthermore, connecting various parts to each other requires the use of mechanical members such as bolts, nuts, pins and/or rivets, which increases the weight of the control surface by the weight of the mechanical members. It is possible to produce sharp edges at connecting points by the mechanical members, so that the thickness of each member needs to be increased for preventing the production of the sharp edges. This also increases the weight of the control surface. Therefore, it is necessary to increase the weight of balance-mass, which is provided for regulating the vibration of a control surface, in proportion to the wing weight. This weight increase results in the weight increase of the entire aircraft, and sometimes causes damage due to increase of the load on a wing control system.

### SUMMARY OF THE INVENTION

An object of the invention is to provide a method for fabricating a composite control surface with a hinge member capable of reducing the fabrication cost of the control surface, and of reducing the control surface weight as well.

In order to achieve the object described above, in accordance with a first aspect of the invention, the method for fabricating a composite control surface having a predetermined hinge member at a leading edge portion thereof, comprises: a dry preform preparation step for preparing a dry preform for a skin portion and a spar portion; a bladder bag arrangement step in which a tube-like bladder bag is inserted into a front hollow portion formed at a front side of the spar portion within the control surface with the hinge member fixed on a predetermined position thereof, the bladder bag having flexibility and fluid-sealing performance, the hinge member getting close contact with the spar portion; an enclosing step for enclosing the dry preform together with the hinge member and the bladder bag into a molding jig having a cavity of a predetermined shape; a resin impregnating step for impregnating the dry preform with a liquid resin, by introducing the liquid resin into the cavity with applying a predetermined pressure to the inside of the bladder bag; and a resin setting step for heating and setting the liquid resin impregnated in the dry preform.

According to the method of the invention, because a dry preform for a skin portion and a spar portion is prepared, a particular bladder bag and the hinge member are inserted into a front hollow portion formed at a front side of the dry preform, the dry preform is enclosed into the molding jig having a predetermined shape of cavity together with the hinge member and the bladder bag, a liquid resin is impregnated into the dry preform by introducing the liquid resin into the cavity with applying a predetermined pressure to the inside of the bladder bag, and the liquid resin impregnated in the dry preform is heated and set, the integral molding between a skin and a spar is achieved simultaneously with the bonding between the spar and the hinge member.

Therefore, it is not necessary to separately fabricate the skin and the spar by machining or laminating/setting prepreg. Further the processes of bonding the skin with the spar and connecting the hinge member with the skin and the spar by mechanical members can be omitted. As a result, part-fabricating costs are reduced, and fabrication processes are also reduced, thereby it is possible to greatly reduce the fabricating costs of the control surface. Furthermore, since it is not necessary to use the mechanical members, such as bolts, nuts, pins and rivets, when the hinge member is connected with the skin and the spar, the weight of the control surface can be greatly reduced. It is also not necessary to increase the thickness of each member for preventing the occurrence of sharp edges, because sharp edges do not occur as in the case of using the mechanical members. With this reason, the weight of the control surface can also be reduced. Accordingly, the weight of a balance-mass, which is provided for regulating the control surface vibration of an aircraft, can be reduced. This weight reduction can contribute to the weight reduction of an entire aircraft, and therefore to the prevention of damage in a wing control system.

Preferably, the enclosing step is adapted to protrude an end of the bladder bag from the molding jig when enclosing the dry preform into the molding jig.

According to the method having such a step, the work of enclosing the dry preform becomes easier than that of enclosing the entire bladder bag inside the molding jig.

The dry preform preparation step may comprise: a skin portion preparation step for preparing a skin tube member made of reinforced fiber; a spar portion preparation step for preparing a spar plate member made of fiber reinforced cloth; and a spar portion sewing step for forming the skin portion and the spar portion by inserting the spar plate member into the skin tube member and sewing together.

The skin portion preparation step may be adapted to prepare the skin tube member by winding reinforced fiber around a predetermined preform forming jig.

The dry preform preparation step may comprise: a tube member preparation step for preparing a front-side-spar tube member and a rear-side-spar tube member which are made of fiber reinforced cloth; and a tube-member sewing step for sewing together the front-side-spar tube member and the rear-side-spar tube member to form the skin portion and the spar portion.

### BRIEF DESCRIPTION OF THE DRAWINGS

By way of example only, a specific embodiment of the present invention will now be described with reference to the accompanying drawings, in which:
FIG. 1 is a perspective view showing a state of a dry preform into which a bladder bag and a mandrel are inserted for use with a fabricating method according to an embodiment of the present invention;
FIG. 2 is a cross-sectional view showing the vicinity of a hinge member in a cross-section taken along the line II-II of FIG. 1;
FIG. 3 is a perspective view showing the vicinity of a wing tip of a hinge-member attached aileron, which is fabricated by the method according to the embodiment of the present invention;
FIG. 4 is a partially sectional view showing a molding jig;
FIGS. 5A and 5B show a conventional hinge-attached control surface made of metal; wherein FIG. 5A is a cross-sectional view showing a mounting part of a metal hinge, and FIG. 5B is a cross-sectional view showing a part without the metal hinge therein; and
FIG. 6 is a perspective view showing the vicinity of the wing tip of the hinge-attached control surface shown in FIGS. 5A and 5B.

### DETAILED DESCRIPTION OF THE PREFERRED EMBODIMENTS

An embodiment of the invention will now be explained in detail with reference to the accompanying drawings.

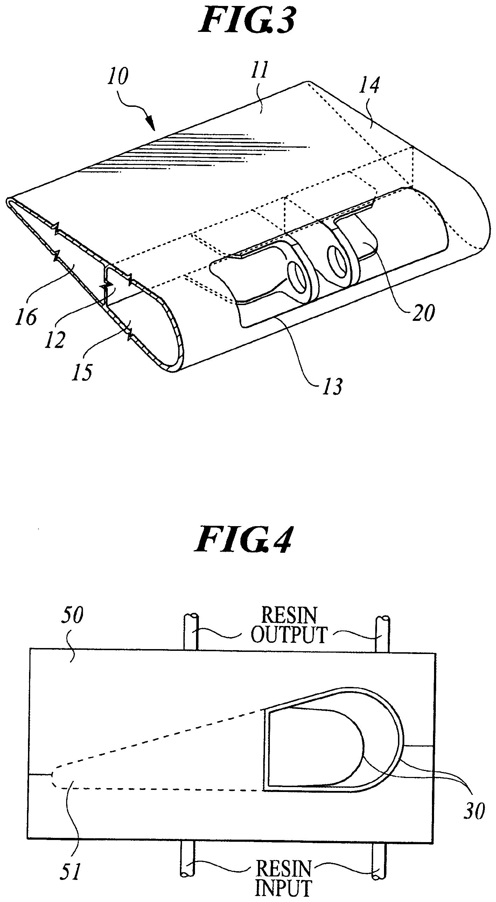

In this embodiment, a description will be given of a fabricating method of a hinge-member attached aileron 10 (see FIG. 3) which is rotatably mounted on a main wing of an aircraft, by using a RTM (Resin Transfer Molding) method.

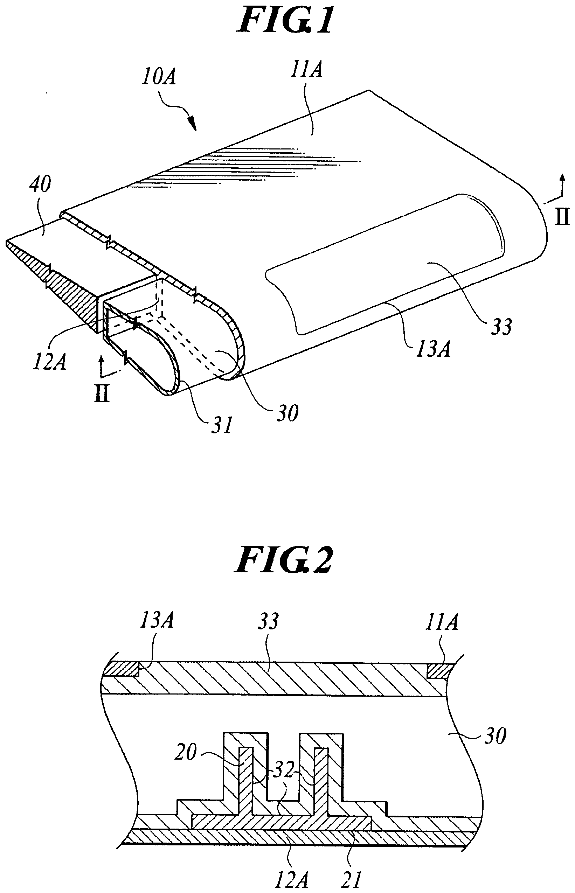

FIG. 1 is a perspective view showing a state of a dry preform 10A, into which a bladder bag 30 and a mandrel 40 are inserted, and which is applied to the fabricating method of the embodiment. FIG. 2 is a cross-sectional view taken along the line II-II of FIG. 1, showing the vicinity of a hinge member 20. FIG. 3 is a perspective view showing the vicinity of a wing tip of a hinge-member attached aileron 10 which is fabricated by the method of the embodiment.

As shown in FIG. 3, the aileron 10 includes a skin 11, a spar 12 extending in a longitudinal direction of the wing to support the skin 11, a hinge member 20 fixed to the front side surface of the spar 12, and a closure 14 closing a wing tip at the rear side of the spar. An inside of the wing is partitioned by the spar 12 into a front side hollow 15 and a rear side hollow 16. The skin has an opening (hinge opening 13) at the leading edge portion, and the hinge member 20, located at the rear side of the opening, is fixed on the spar 12.

On the occasion of fabricating, initially, a dry preform 10A, including a skin portion 11A and a spar portion 12A, is prepared as shown in FIG. 1 (dry preform preparation step). The dry preform is a predetermined shape of resin-non-impregnated member, which is formed by sewing plural sheets of laminated fiber reinforced cloths (dry fabric) or by knitting reinforced fibers to one another. As for the reinforced fiber forming the dry preform, there may be employed glass fiber, carbon fiber, aramid fiber, aluminum fiber or the like.

The dry preform preparation step includes the following steps. First, the reinforced fiber is wound around a preform forming jig (not shown) and sewn, to thereby prepare a skin tube member (skin tube preparation step). There are also prepared a spar plate and a closure plate to be used at the rear side of the spar, both made of fiber reinforced cloths (spar/wing tip portion preparation step). Next, the spar plate is inserted into the inside of the skin tube, and sewn thereon. The closure plate is also sewn on the skin tube at the wing tip and rear side of the spar. At this step, as an alternative, both of the skin tube and the spar plate may have respective extra allowances at the wing tip side to form a closure plate by bending these portions of the dry preform (spar/wing tip portion sewing step). Thus, there is prepared the dry preform 10A having the skin portion 11A and the spar portion 12A.

Subsequently, as shown in FIG. 1, a predetermined portion at the leading edge side of the skin portion 11A is cut out, thereby forming a hinge opening portion 13A (hinge opening portion forming step).

Next, a tube-like bladder bag 30 and the hinge member 20 fixed on a predetermined position of the bladder bag 30 are inserted into a front hollow 15 formed at the front side of the spar portion 12A so that both opening ends 31 of the bladder bag 30 (shown one side only) protrude outward from the front hollow 15 (bladder bag arrangement step).

The bladder bag 30 forms the front side hollow 15 to hold the shape of the leading edge of the wing, and prevents liquid resin from permeating inside in a resin impregnating step which will be explained later. Therefore, the material for it has to have high fluid sealing performance and elasticity. The material also needs flexibility so that the bladder bag 30 can be taken out through the hinge opening 13 on the skin 11 after completion of molding the aileron 10. As for the material having such fluid sealing performance, elasticity, flexibility and high temperature resistance when molding, there may be employed silicon rubber, fluoroelastomer, or the like.

The bladder bag 30 is, as shown in FIG. 2, provided with a concave portion 32 opening outward at its predetermined position for holding the hinge member 20 corresponding thereto. The hinge member 20 is inserted into the front hollow of the preform 10A and positioned with the state of fitting into the concave 32 and being fixed on the bladder bag 30. On the outside surface of the bladder bag 30 in front of the concave 32, there is, as shown in FIG. 2, provided a convex portion 33 having the shape corresponding to the hinge opening portion 13A on the skin portion 11A. When the bladder bag 30 is inserted into the front hollow of the preform 10A, the convex portion 33 fits into the opening portion 13A to prevent the resin from remaining during introduction of the resin.

The hinge member 20 is a member for rotatably mounting the wing structure, which has the skin 11 and the spar 12, on a main wing, and made of composite material formed by stitching reinforced fiber, or made of metal. The member 20 is, as shown in FIG. 2, attached to the spar portion 12A with its adhesion surface 21 closely contacted therewith. When the hinge member 20 is made of metal, film type adhesive is sandwiched between the adhesion surface 21 and the spar portion 12A, and further, a glass-fiber layer is to be preferably formed on the surface to prevent electrolytic corrosion.

Next, as shown in FIG. 1, a mandrel 40 is inserted into the rear hollow, which is formed by the spar portion 12A and the trailing edge side portion of the skin portion 11A (mandrel insertion step).

The mandrel 40 is a jig for forming the rear side hollow 16 of the aileron 10, and made of metal, fiber reinforced composite, silicon, or the like. The mandrel 40 is so shaped that it can be taken out from the rear hollow 16 after completion of molding the aileron 10. The mandrel 40 can be composed of a plurality of dividable members so as to be separately taken out from the rear hollow 16 after completion of molding the aileron 10.

Next, the dry preform 10A is enclosed into the inside of a molding jig 50 together with the hinge member 20, the bladder bag 30 and mandrel 40, the molding jig 50 having a predetermined shape of cavity 51, with both bladder bag opening ends 31 protruding outward from the molding jig 50 (enclosing step).

Subsequently, with a predetermined pressure applied to the inside of the bladder bag 30 via the opening end 31, molten thermosetting resin (liquid resin) is introduced into the molding-jig cavity to impregnate the dry preform 10A with the liquid resin (resin impregnating step). The pressure applied to the inside of the bladder bag 30 is set such that it is more than that capable of introducing the liquid resin and does not deform the bladder bag 30. As the thermosetting resin to be introduced into the cavity, there may be employed epoxy resin, phenol resin, cross-linked polyethylene, polyimide, etc.

Then, the liquid resin impregnated into the dry preform 10A is heated and hardened by an oven or the like to mold the skin 11, the spar 12 and the closure 14, and simultaneously to bond the spar 12 with the hinge member 20 (resin setting step). Thereafter, the bladder bag 30 is taken out from the hinge opening 13, and the mandrel 40 is taken out from the rear hollow 16.

Apart from the molding of the skin 11 and the spar 12, a closure of a wing-root side (not shown) is molded with composite material by impregnating a plate for the closure made of fiber reinforced cloth with liquid resin. After molding the skin 11, the spar 12 and the hinge member 20 with composite material, the wing-root side closure is glued to the wing-root portion. Taking the steps described above, fabrication of the hinge-member-attached aileron 10 is completed (see FIG. 3).

The fabricating method in the embodiment includes the steps of preparing the dry preform 10A having the skin portion 11A and the spar portion 12A, inserting the hinge member 20 and the bladder bag 30 into the front side hollow of the preform 10A, inserting the mandrel 40 into the rear side hollow of the preform 10A, enclosing the preform 10A together with the member 20, the bladder bag 30 and the mandrel 40 inside the cavity, impregnating the preform 10A with the liquid resin by introducing the liquid resin into the cavity with a predetermined pressure applied to the inside of the bladder bag 30, and heating and setting the impregnated liquid resin, whereby the integral molding between the skin 11 and the spar 12 is achieved simultaneously with the bonding between the spar 12 and the hinge member 20.

Therefore, it is not necessary to separately fabricate the skin 11 and the spar 12 by machining or laminating/setting prepreg. Further the processes of bonding the skin 11 with the spar 12, and connecting the hinge member 20 with the skin 11 and the spar 12 by mechanical members can be omitted. As a result, part fabricating cost is reduced, and fabrication processes are also reduced, whereby the fabricating cost of the hinge-member-attached aileron 10 can be greatly reduced.

Furthermore, it is not necessary to use mechanical members such as bolts, nuts, pins and rivets, when the hinge member 20 is connected with the skin 11 and the spar 12, thereby greatly reducing the weight of the aileron 10. It is also not necessary to increase the part thickness for preventing the occurrence of sharp edges, because sharp edges do not occur as in the case of using mechanical members. With this reason, the weight of the aileron 10 can also be reduced. Accordingly, the weight of the balance-mass which is provided for regulating the control surface vibration of an aircraft, can be reduced. This weight reduction can contribute to the weight reduction of an entire aircraft and therefore to the prevention of damage in a wing control system.

As for the skin portion preparation step of the embodiment, the skin tube member is prepared by winding reinforced fiber around the preform molding jig, but the method is not limited to this embodiment. For example, an upper skin plate and a lower skin plate, both being made of fiber reinforced cloth, may be arranged on the upper and lower surfaces of the preform molding jig, and then the leading edge and trailing edge portions of both plates are sewn together, whereby a skin tube member can be prepared.

As for the dry preform preparation step of the above-described embodiment, the dry preform 10A having the skin portion 11A and the spar portion 12A is prepared by sewing a spar plate member to a skin tube member after preparing the skin tube member and the spar plate member separately, but this dry preform preparation step may be modified as follows.

First, there may be prepared a front-side-spar tube member and a rear-side-spar tube member, both being made of fiber reinforced cloth (tube-member preparation step), and a closure plate made of fiber reinforced cloth (wing tip portion preparation step). Next, the front-side-spar tube member and the rear-side-spar tube member are sewn together to form the skin portion 11A and the spar portion 12A (tube-member sewing step). Then, the closure plate is sewn to the rear side portion of the spar in the wing tip of the skin portion 11A (wing tip sewing step). These steps result in preparation of the dry preform 10A having the skin portion 11A and the spar portion 12A.

The present invention has been described with respect to particular embodiments. It is to be understood that the invention is not limited to the above-described embodiments, and that various changes and modifications may be made by those of ordinary skill in the art without departing from the scope of the invention.

## Claims

1. A method for fabricating a composite control surface (10) having a predetermined hinge member (20) at a leading edge portion thereof, comprising:
a dry preform preparation step for preparing a dry preform (10A) for a skin portion (11A) and a spar portion (12A); a bladder bag arrangement step in which a tube-like bladder bag (30) is inserted into a front hollow portion (15) formed at a front side of the spar portion within the control surface with the hinge member (20) fixed on a predetermined position on the bladder bag, the bladder bag having flexibility and fluid-sealing performance, the hinge member being brought in close contact with the spar portion;
an enclosing step for enclosing the dry preform together with the hinge member and the bladder bag into a molding jig (50) having a cavity (51) of a predetermined shape; a resin impregnating step for impregnating the dry preform with a liquid resin, by introducing the liquid resin into the cavity while applying a predetermined pressure to the inside of the bladder bag; and
a resin setting step for heating and setting the liquid resin impregnated in the dry preform.

2. The method according to claim 1, wherein the enclosing step is adapted to protrude an end (31) of the bladder bag from the molding jig when enclosing the dry preform into the molding jig.

3. The method according to claims 1 or 2, wherein the dry preform preparation step comprises:
a skin portion preparation step for preparing a skin tube member made of reinforced fiber;
a spar portion preparation step for preparing a spar plate member made of fiber reinforced cloth; and
a spar portion sewing step for forming the skin portion and the spar portion by inserting the spar plate member into the skin tube member and sewing together.

4. The method according to claim 3, wherein the skin portion preparation step is adapted to prepare the skin tube member by winding reinforced fiber around a predetermined preform forming jig.

5. The method according to claims 1 or 2, wherein the dry preform preparation step comprises:
a tube member preparation step for preparing a front-side-spar tube member and a rear-side-spar tube member which are made of fiber reinforced cloth; and
a tube-member sewing step for sewing together the front-side-spar tube member and the rear-side-spar tube member to form the skin portion and the spar portion.

6. The method according to any of claims 3-5, wherein the reinforced fiber comprises any selected from the group consisting of glass fiber, carbon fiber, aramid fiber, and aluminum fiber.

7. The method according to any of the preceding claims, further comprising a hinge opening portion (13) forming step for forming an opening at a predetermined portion of a leading edge side of the skin portion after the dry preform preparation step.

8. The method according to any one of preceding claims, wherein the hinge member is made of metal and is covered with a glass-fiber layer.

9. The method according to any of the preceding claims, further comprising a mandrel insertion step for inserting a mandrel (40) into a rear hollow portion formed at a rear side of the spar portion within a wing, before the enclosing step.

10. The method according to claim 9, wherein the mandrel comprises any selected from the group consisting of metal, fiber reinforced composite and silicon.

11. The method according to any of the preceding claims, wherein the liquid resin introduced in the resin impregnating step is any selected from the group consisting of epoxy resin, phenol resin, cross-linked polyethylene and polyimide.

12. The method according to any of claims 3-6, wherein the skin portion preparation step is adapted to prepare the skin tube member by arranging an upper skin plate and a lower skin plate, made of fiber reinforced cloth, on upper and lower surfaces of the preform molding jig, and by sewing leading edge and trailing edge portions of the upper skin plate and the lower skin plate.

## Patentansprüche

1. Verfahren zum Herstellen einer Verbund-Steuerfläche (10) mit einem vorausbestimmten Scharnierelement (20) an einem Eintrittskantenabschnitt desselben, umfassend:
einen Trockenvorformling-Anfertigungsschritt zum Anfertigen eines trockenen Vorformlings (10A) für einen Außenhautabschnitt (11A) und einen Holmabschnitt (12A);
einen Blasenbeutel-Anordnungsschritt, in dem ein röhrenartiger Blasenbeutel (30) in einen vorderen hohlen Abschnitt (15), der an einer Vorderseite des Holmabschnitts innerhalb der Steuerfläche gebildet ist, eingebracht wird, wobei das Scharnierelement (20) an einer vorausbestimmten Stelle an dem Blasenbeutel fixiert ist, wobei der Blasenbeutel Flexibilität und fluiddichtendes Verhalten aufweist, wobei das Scharnierelement in engen Kontakt mit dem Holmabschnitt gebracht wird;
einen Einschließschritt zum Einschließen des trockenen Vorformlings zusammen mit dem Scharnierelement und dem Blasenbeutel in eine Formvorrichtung (50) mit einer Höhlung (51) einer vorausbestimmten Form;
einen Harztränkungsschritt zum Tränken des trockenen Vorformlings mit einem Flüssigharz durch Einbringen des Flüssigharzes in die Höhlung, während ein vorausbestimmter Druck auf das Innere des Blasenbeutels ausgeübt wird; und
einen Harzaushärtungsschritt zum Erwärmen und Aushärten des in den trockenen Vorformling getränkten Flüssigharzes.

2. Verfahren nach Anspruch 1, wobei der Einschließschritt dazu angepasst ist, ein Ende (31) des Blasenbeutels aus der Formvorrichtung vorstehen zu lassen, wenn der trockene Vorformling in der Formvorrichtung eingeschlossen wird.

3. Verfahren nach Anspruch 1 oder 2, wobei der Trockenvorformling-Anfertigungsschritt folgendes umfasst:
einen Außenhaut-Anfertigungsschritt zum Anfertigen eines aus verstärkten Fasern hergestellten Außenhaut-Röhrenelements;
einen Holmabschnitt-Anfertigungsschritt zum Anfertigen eines aus faserverstärktem Tuch hergestellten Holmplattenelements; und
einen Holmabschnitt-Nähschritt zum Bilden des Außenhautabschnitts und des Holmabschnitts durch Einbringen des Holmplattenelements in das Außenhaut-Röhrenelement und Aneinandernähen.

4. Verfahren nach Anspruch 3, wobei der Außenhaut-Anfertigungsschritt dazu angepasst ist, das Außenhaut-Röhrenelement durch Wickeln von verstärkten Fasern um eine vorausbestimmte Vorformling-Bildungsvorrichtung anzufertigen.

5. Verfahren nach Anspruch 1 oder 2, wobei der Trockenvorformling-Anfertigungsschritt folgendes umfasst:
einen Röhrenelement-Anfertigungsschritt zum Anfertigen eines Vorderseitenholm-Röhrenelements und eines Rückseitenholm-Röhrenelements, die aus faserverstärktem Tuch hergestellt sind; und
einen Röhrenelement-Nähschritt zum Aneinandernähen des Vorderseitenholm-Röhrenelements und des Rückseitenholm-Röhrenelements, um den Außenhautabschnitt und den Holmabschnitt zu bilden.

6. Verfahren nach einem der Schritte 3-5, wobei die verstärkte Faser eine beliebige aus der aus Glasfaser, Kohlenstofffaser, Aramidfaser und Aluminiumfaser bestehenden Gruppe ausgewählte umfasst.

7. Verfahren nach einem der vorangehenden Ansprüche, weiter umfassend einen Scharnieröffhungsabschnitt(13)-Bildungsschritt zum Bilden einer Öffnung an einem vorausbestimmten Abschnitt einer Eintrittskantenseite des Außenhautabschnitts nach dem Trockenvorformling -Anfertigungsschritt.

8. Verfahren nach einem der vorangehenden Ansprüche, wobei das Scharnierelement aus Metall hergestellt ist und von einer Glasfaserschicht bedeckt ist.

9. Verfahren nach einem der vorangehenden Ansprüche, weiter umfassend einen Domeinbringschritt zum Einbringen eines Dorns (40) in einen hinteren hohlen Abschnitt, der an einer Rückseite des Holmabschnitts innerhalb eines Flügels gebildet ist, vor dem Einschließschritt.

10. Verfahren nach Anspruch 9, wobei der Dorn ein beliebiges aus der aus Metall, faserverstärktes Verbundmaterial und Silizium bestehenden Gruppe ausgewähltes umfasst.

11. Verfahren nach einem der vorangehenden Ansprüche, wobei es sich bei dem in dem Harztränkungsschritt eingebrachten Flüssigharz um ein beliebiges aus der aus Epoxidharz, Phenolharz, vernetztem Polyethylen und Polyimid bestehenden Gruppe ausgewähltes handelt.

12. Verfahren nach einem der Ansprüche 3-6, wobei der Außenhaut-Anfertigungsschritt dazu angepasst ist, das Außenhaut-Röhrenelement anzufertigen, indem eine obere Außenhautplatte und eine untere Außenhautplatte, die aus faserverstärktem Tuch hergestellt sind, auf einer oberen und einer unteren Oberfläche der Vorformling-Formvorrichtung angeordnet werden, und indem Eintrittskanten- und Austrittskantenabschnitte der oberen Außenhautplatte und der unteren Außenhautplatte genäht werden.

## Revendications

1. Procédé de fabrication d'une gouverne composite (10) ayant un élément d'articulation prédéterminé (20) au niveau d'une partie formant bord d'attaque de celle-ci, comportant :
une étape de préparation de préforme sèche consistant à préparer une préforme sèche (10A) pour une partie formant revêtement (11A) et une partie formant longeron (12A) ;
une étape d'agencement de sac vessie dans laquelle un sac vessie tubulaire (30) est inséré dans une partie creuse avant (15) formée au niveau d'un côté avant de la partie formant longeron à l'intérieur de la gouverne avec l'élément d'articulation (20) fixé sur une position prédéterminée sur le sac vessie, le sac vessie présentant une flexibilité et une performance d'étanchéité aux fluides, l'élément d'articulation étant mis en contact étroit avec la partie formant longeron ;
une étape d'enfermement consistant à enfermer la préforme sèche avec l'élément d'articulation et le sac vessie dans un gabarit de moulage (50) ayant une cavité (51) d'une forme prédéterminée ;
une étape d'imprégnation de résine consistant à imprégner la préforme sèche au moyen d'une résine liquide, en introduisant la résine liquide dans la cavité tout en exerçant une pression prédéterminée sur la partie intérieure du sac vessie ; et
une étape de prise de la résine consistant à chauffer et faire prendre la résine liquide imprégnée dans la préforme sèche.

2. Procédé selon la revendication 1, dans lequel l'étape d'enfermement est adaptée pour faire dépasser une extrémité (31) du sac vessie par rapport au gabarit de moulage lors de l'enfermement de la préforme sèche dans le gabarit de moulage.

3. Procédé selon la revendication 1 ou la revendication 2, dans lequel l'étape de préparation de la préforme sèche comporte :
une étape de préparation de la partie formant revêtement consistant à préparer un élément tubulaire de revêtement réalisé en fibre renforcée ;
une étape de préparation de la partie formant longeron consistant à préparer un élément de plaque de longeron réalisé en une toile renforcée de fibre ; et
une étape de couture de la partie formant longeron consistant à former la partie formant revêtement et la partie formant longeron en insérant l'élément de plaque de longeron dans l'élément tubulaire de revêtement et en les cousant ensemble.

4. Procédé selon la revendication 3, dans lequel l'étape de préparation de la partie formant revêtement est adaptée pour préparer l'élément tubulaire de revêtement en enroulant de la fibre renforcée autour d'un gabarit de formation de préforme prédéterminée.

5. Procédé selon la revendication 1 ou la revendication 2, dans lequel l'étape de préparation de la préforme sèche comporte :
une étape de préparation d'éléments tubulaires consistant à préparer un élément tubulaire de longeron côté avant et un élément tubulaire de longeron côté arrière qui sont réalisés en toile renforcée de fibre ; et
une étape de couture d'éléments tubulaires consistant à coudre ensemble l'élément tubulaire de longeron côté avant et l'élément tubulaire de longeron côté arrière pour former la partie formant revêtement et la partie formant longeron.

6. Procédé selon l'une quelconque des revendications 3 à 5, dans lequel la fibre renforcée comporte une fibre quelconque sélectionnée dans le groupe constitué par de la fibre de verre, de la fibre de carbone, de la fibre aramide, et de la fibre d'aluminium.

7. Procédé selon l'une quelconque des revendications précédentes, comportant par ailleurs une étape de formation de partie d'ouverture d'articulation (13) consistant à former une ouverture au niveau d'une partie prédéterminée d'un côté de bord d'attaque de la partie formant revêtement après l'étape de préparation de la préforme sèche.

8. Procédé selon l'une quelconque des revendications précédentes, dans lequel l'élément d'articulation est réalisé en métal et est revêtu d'une couche de fibre de verre.

9. Procédé selon l'une quelconque des revendications précédentes, comportant par ailleurs une étape d'insertion de mandrin consistant à insérer un mandrin (40) dans une partie creuse arrière formée au niveau d'un côté arrière de la partie formant longeron à l'intérieur d'une aile, avant l'étape d'enfermement.

10. Procédé selon la revendication 9, dans lequel le mandrin comporte l'un quelconque sélectionné dans le groupe constitué par du métal, un composite renforcé de fibre et du silicium.

11. Procédé selon l'une quelconque des revendications précédentes, dans lequel la résine liquide introduite au cours de l'étape d'imprégnation de résine est l'un quelconque sélectionné dans le groupe constitué par de la résine époxyde, de la résine phénolique, du polyéthylène réticulé et du polyimide.

12. Procédé selon l'une quelconque des revendications 3 à 6, dans lequel l'étape de préparation de la partie formant revêtement est adaptée pour préparer l'élément tubulaire de revêtement en agençant une plaque de revêtement supérieure et une plaque de revêtement inférieure, réalisées en une toile renforcée de fibre, sur les surfaces supérieure et inférieure du gabarit de moulage de préforme, et en cousant les parties formant bord d'attaque et bord de fuite de la plaque de revêtement supérieure et de la plaque de revêtement inférieure.
